# EUROPEAN PATENT SPECIFICATION

(11) **EP 3 825 360 B1**
(45) Date of publication and mention of the grant of the patent: **13.09.2023**
(21) Application number: 20812949.4
(22) Date of filing: 18.05.2020
(51) Int. Cl.: C08L 73/00, C08K 9/04, C08K 3/04, C08K 3/30, C08L 27/16, C08L 27/18, C08K 3/34, C08K 3/36, C08L 77/02, C09D 171/00

(54) **LINING MATERIAL FOR NON-METALLIC FLEXIBLE COMPOSITE PIPE AND PREPARATION METHOD THEREFOR**
AUSKLEIDUNGSMATERIAL FÜR NICHTMETALLISCHE FLEXIBLE VERBUNDROHRE UND VERFAHREN ZU DESSEN HERSTELLUNG
MATÉRIAU D'HABILLAGE POUR TUYAU COMPOSITE SOUPLE NON MÉTALLIQUE ET SON PROCÉDÉ DE PRÉPARATION

(30) Priority: 25.05.2019 CN 201910444766
(43) Date of publication of application: 26.05.2021
(73) Proprietor: China Merchants Marine and Offshore Research Institute Co., Ltd., Shenzhen, Guangdong 518027 (CN); China University of Petroleum-Beijing, Beijing 102249 (CN)
(72) Inventor: XU, Lixin, Shenzhen, Guangdong 518027 (CN); MENG, Xiaoyu, Beijing 102249 (CN); CAO, Hui, Beijing 102249 (CN); CONG, Chuanbo, Beijing 102249 (CN); GUO, Qinjing, Shenzhen, Guangdong 518027 (CN); ZHOU, Qiong, Beijing 102249 (CN); LIU, Jiancheng, Shenzhen, Guangdong 518027 (CN)
(74) Representative: ZHAOffice SPRL
(86) International application number: PCT/CN2020/090857
(87) International publication number: WO 2020/238683

(56) References cited:
- WO-A1-2017/143954
- CN-A- 101 215 410
- CN-A- 102 850 628
- CN-A- 103 881 188
- CN-A- 103 881 380
- CN-A- 104 151 664
- CN-A- 104 844 878
- CN-A- 105 348 796
- CN-A- 110 283 446

## Description

### Technical Field

The present invention relates to the field of industrial application of polymer materials, and in particular to a lining material of a nonmetal flexible composite pipe and a preparation method thereof.

### Background Art

An offshore oil and gas pipeline, as the "lifeline" of an offshore oil and gas production system, plays a crucial role in the development and output of offshore oil and gas resources. However, the joint action of high temperature, high pressure, hydrogen sulfide, carbon dioxide and the like in the pipeline easily causes degradation of the material properties. At present, transportation pipelines for underground and marine engineering are mostly made of steel and are corroded from environmental conditions such as transportation media, soil, microorganisms and external atmosphere because they are buried underground all the year round. Meanwhile, with the increase of the transportation time, constant corrosion of the transportation media and gradual thinning of the pipeline wall, in case that the transportation pressure remains unchanged, the pipeline leaks frequently and even bursts. Further, the leaking pipelines are almost all buried under the ground or sea, and the span length is very long, from one kilometer to dozens of kilometers, and even hundreds of kilometers, so that it is time-consuming and laborious to find leaking points and conduct digging and repairing, and the cost is high and it is difficult to repair the entire pipeline. Therefore, there is a need for a material that has excellent temperature resistance, mechanical properties, corrosion resistance and barrier properties.

A single material can rarely meet the requirements for various properties, and a composite material is an effective means of enhancing overall material performance. A Chinese patent document (Application No.: 201410591918.8) discloses a composite wire flexible pipe, in which a complex liquid of reinforced nanoparticles and a binder is used; and the reinforced particles include one or several of nano silicon dioxide, nano aluminum oxide, nano calcium carbonate, carbon nano tube and nano graphite. The complex liquid is wrapped around reinforcing fibers of a flexible pipe and plays a role of bonding enhancement. This is significantly different from the preparation of a lining material. This composite liquid does not need to consider the barrier properties of the medium; in addition, there is no need to consider the dispersion of the particles in the polymer matrix, which is the key to making the nanoparticles work.

Therefore, the present invention provides a lining material of a nonmetal flexible composite pipe for use in a marine riser and a submarine pipeline and a preparation method thereof, in which through surface modification, nanoparticles are uniformly dispersed in a polymer matrix, thereby improving the corrosion resistance, barrier properties, mechanical properties and temperature resistance of the material.

Chinese Patent application CN 101 215 410 A discloses D1 discloses the use of a modified resin of polybutylene terephthalate (PBT) with modified nanometer silicon oxide whose mass portion is 2-8, and anti-oxidant whose mass portion is 0.15-0.3 for use in electronics, electrical appliances and automobiles.

International Patent Application WO2017143954 discloses a flexible composite liner, the inner layer of the pipe material being a high density polyethylene material with 1-10 parts of inorganic nanoparticles.

Chinese Patent Application CN 103 881 380 discloses a polyphenylene sulfide composite material comprising graphite and molybdenum disulfide.

### Summary of the Invention

The technical problem to be solved by the present invention is to provide a lining material of a nonmetal flexible composite pipe, which enables uniform dispersion and improvement in corrosion resistance, barrier properties, mechanical properties and temperature resistance.

To solve the above-mentioned problem, the technical solution adopted by the present invention is as follows: the lining material of a nonmetal flexible composite pipe is a modified thermoplastic polymer composite material, consisting of the following components in the following proportions:
89.5-99.4wt% of a polymer matrix;
0.5-10wt% of inorganic particles; and
0.1-0.5wt% of an antioxidant.

In the above-mentioned technical solution, the polymer matrix is mixed with the inorganic particles and the antioxidant such that the inorganic particles are uniformly dispersed in the polymer matrix; and through synergy of the components, the corrosion resistance, barrier properties, mechanical properties and temperature resistance of the lining material of a nonmetal flexible composite pipe can be improved.

In the present invention, the polymer matrix is one of polyamide (PA), polyketone (POK), polyether ether ketone (PEEK), polyvinylidene fluoride (PVDF), fusible polytetrafluoroethylene (PFA) or a mixture thereof.

As a preferred technical solution of the present invention, the inorganic particles refer to one of nano silicon dioxide (SiO₂), carbon nano tube (CNT), carbon nanofiber aggregate (CNFA), graphene oxide (GO), nano montmorillonite (MMT), graphite (Gr) and molybdenum disulfide (MoS₂), or a mixture thereof.

As a preferred technical solution of the present invention, the inorganic particles are subjected to surface modification using a surface modifier, wherein the surface modifier is one of a silane coupling agent, a quaternary ammonium salt surfactant, ethylenediamine, polyethyleneimine and a polyurethane prepolymer; and the mass ratio of the surface modifier to the inorganic particles is 1: 100 to 1:10. After surface modification, the inorganic particles achieve better dispersibility in the polymer matrix, thereby improving the corrosion resistance, barrier properties, mechanical properties and temperature resistance of the lining material of a nonmetal flexible composite pipe.

As a preferred technical solution of the present invention, the particle size of the inorganic particles is 200-400 meshes.

The technical problem to be further solved by the present invention is to provide a method of preparing a lining material of a nonmetal flexible composite pipe, which enables uniform dispersion and improvement in corrosion resistance, barrier properties, mechanical properties and temperature resistance.

To solve the above-mentioned problem, the technical solution adopted by the present invention is as follows: the method of preparing a lining material of a nonmetal flexible composite pipe comprises the following specific steps:
(1) preparation of raw materials: raw materials are weighted in a mass ratio for later use, the raw materials comprising 89.5-99.4wt% of a polymer matrix, 0.5-10wt% of inorganic particles and 0.1-0.5wt% of an antioxidant;
(2) compounding and plasticizing: the inorganic particles and the polymer matrix as well as the antioxidant are added into a twin-screw extruder or a mixer at an extruding or mixing temperature of 190-360°C, and extruded and cooled for later use; and
(3) pelleting: the materials after the compounding and plasticizing obtained in the step (2) are pelleted in a pelletizer to obtain the lining material of a nonmetal flexible composite pipe.

The lining material of a nonmetal flexible composite pipe is used in a marine riser and/or a submarine pipeline.

Compared with the prior art, the present invention has the following beneficial effects:
(1) the modification of the inorganic particles enables the inorganic particles to be dispersed more uniformly in the polymer matrix;
(2) after the compound modification, the lining material of a nonmetal flexible composite pipe is remarkably improved in terms of corrosion resistance, barrier properties, mechanical properties and temperature resistance; and
(3) the lining material of a nonmetal flexible composite pipe has simple composition but better performance, so that the cost is lowered; and meanwhile, the preparation method is simple, controllable and suitable for a wide range of applications.

### Detailed Description of Embodiments

### Example 1:

The lining material of a nonmetal flexible composite pipe was prepared by the following specific steps:
(1) preparation of raw materials: raw materials were weighted in a mass ratio for later use, the raw materials including 89.5wt% of a polymer matrix, 5wt% of nano SiO₂ and 5wt% of MMT, and 0.5wt% of an antioxidant;
(2) compounding and plasticizing: the nano SiO₂ and the MMT and the polymer matrix as well as the antioxidant in the step (1) were added into a twin-screw extruder at an extruding temperature of 190-230°C, and extruded and cooled for later use; and
(3) pelleting: the materials after the compounding and plasticizing obtained in the step (2) were pelleted in a pelletizer at a pelleting temperature of 200°C to obtain the lining material of a nonmetal flexible composite pipe.

### Example 2:

The lining material of a nonmetal flexible composite pipe was prepared by the following specific steps:
(1) preparation of raw materials: raw materials were weighted in a mass ratio for later use, the raw materials including 98.8wt% of POK, 0.5wt% of CNT and 0.5wt% of MoS₂, and 0.2wt% of an antioxidant;
(2) surface modification of inorganic particles: CNT was subjected to surface modification, wherein a surface modifier was a polyurethane prepolymer, and the mass ratio of the polyurethane prepolymer to the carbon nano tube was 1: 10;
(3) compounding and plasticizing: the CNT subjected to surface modification in the step (2) and MoS₂ and the polymer matrix as well as the antioxidant were added into a twin-screw extruder at an extruding temperature of 190-230°C, and extruded and cooled for later use; and
(4) pelleting: the materials after the compounding and plasticizing obtained in the step (3) were pelleted in a pelletizer at a pelleting temperature of 200°C to obtain the lining material of a nonmetal flexible composite pipe.

### Example 3:

The lining material of a nonmetal flexible composite pipe was prepared by the following specific steps:
(1) preparation of raw materials: raw materials were weighted in a mass ratio for later use, the raw materials including 89.8wt% of PVDF, 3.0wt% of nano montmorillonite and 0.2wt% of an antioxidant;
(2) surface modification of inorganic particles: the nano montmorillonite was subjected to surface modification, wherein a surface modifier was a quaternary ammonium salt surfactant, and the mass ratio of the quaternary ammonium salt surfactant to the nano montmorillonite was 1:40;
(3) compounding and plasticizing: the nano montmorillonite subjected to surface modification in the step (2) and the polymer matrix as well as the antioxidant were added into a mixer at a mixing temperature of 220°C, and extruded and cooled for later use; and
(4) pelleting: the materials after the compounding and plasticizing obtained in the step (3) were pelleted in a pelletizer at a pelleting temperature of 200°C to obtain the lining material of a nonmetal flexible composite pipe.

### Example 4:

The lining material of a nonmetal flexible composite pipe was prepared by the following specific steps:
(1) preparation of raw materials: raw materials were weighted in a mass ratio for later use, the raw materials including 99.4wt% of PFA, 0.5wt% of GO and 0.1wt% of an antioxidant;
(2) surface modification of inorganic particles: GO was subjected to surface modification, wherein a surface modifier was polyethyleneimine, and the mass ratio of the polyethyleneimine to the graphene oxide was 1:100;
(3) compounding and plasticizing: the GO subjected to surface modification in the step (2) and the polymer matrix as well as the antioxidant were added into a twin-screw extruder at an extruding temperature of 280-350°C, and extruded and cooled for later use; and
(4) pelleting: the materials after the compounding and plasticizing obtained in the step (3) were pelleted in a pelletizer at a pelleting temperature of 200°C to obtain the lining material of a nonmetal flexible composite pipe.

### Example 5:

The lining material of a nonmetal flexible composite pipe was prepared by the following specific steps:
(1) preparation of raw materials: raw materials were weighted in a mass ratio for later use, the raw materials including 89.8wt% of PEEK, 2wt% of nano CNF and 1wt% of graphite, and 0.3wt% of an antioxidant;
(2) compounding and plasticizing: the PEEK and the nano CNF and the graphite as well as the antioxidant in the step (1) were added into a twin-screw extruder at an extruding temperature of 310-360°C, and extruded and cooled for later use; and
(3) pelleting: the materials after the compounding and plasticizing obtained in the step (2) were pelleted in a pelletizer at a pelleting temperature of 200°C to obtain the lining material of a nonmetal flexible composite pipe.

The test results of the properties of the above-mentioned five examples and the corresponding polymer matrices are shown in Table 1 below:

**Table 1 Comparison of properties of five examples and corresponding polymer matrices**

| | Example 1 | PA11 matrix | Example 2 | POK matrix | Example 3 | PVDF matrix | Example 4 | PFA matrix | Example 5 | PEEK matrix |
|---|---|---|---|---|---|---|---|---|---|---|
| Vicat softening temperature/° C (B50) | 164 | 160 | 196 | 190 | 142 | 139 | 135 | 130 | 218 | 214 |
| Tensile strength /MPa | 60 | 50 | 70 | 55 | 57 | 51 | 35 | 28 | 95 | 83 |
| Elongation at break/% | 270 | 350 | 280 | 300 | 300 | 400 | 265 | 300 | 38 | 43 |
| Change rate of tensile strength/% | -9.5 | -13.1 | -4.1 | -5.1 | -12.5 | -16.4 | -4.5 | -8.1 | -1.9 | -2.3 |
| Change rate of mass/% | +3.2 | +4.3 | +2.0 | +3.2 | +5.0 | +7.8 | +2.2 | +3.7 | +1.8 | +2.1 |
| O₂ permeability/ cc.mm.m⁻².d⁻¹ atm⁻¹ | 0.50 | 0.80 | 0.15 | 0.20 | 0.10 | 0.20 | 0.07 | 0.10 | 0.03 | 0.05 |
| Notes: In the Table, the change rate of tensile strength and the change rate of mass are used to evaluate the corrosion resistance of the material, and in the data of change rates, "+" represents increase of the value, and "-" represents decrease of the value. In the Example 1, corrosion conditions 1 are used to evaluate the corrosion resistance; in the Examples 2 and 3, corrosion conditions 2 are used to evaluate the corrosion resistance; and in the Examples 4 and 5, corrosion conditions 3 are used to evaluate the corrosion resistance. | | | | | | | | | | |
| Corrosion conditions 1: temperature of 80°C, 60vol% of a liquid phase, 40vol% of a gas phase, the liquid phase containing 50vol% of mineralized water and 50vol% of crude oil, total pressure of 30MPa, including H₂S partial pressure of 0.9MPa, CO₂ partial pressure of 1.0MPa and the rest being N₂, and experimental time of 7 days; corrosion conditions 2: temperature of 120°C, 60vol% of a liquid phase, 40vol% of a gas phase, the liquid phase containing 50vol% of mineralized water and 50vol% of crude oil, total pressure of 30MPa, including H₂S partial pressure of 0.9MPa, CO₂ partial pressure of 1.0MPa and the rest being N₂, and experimental time of 7 days; and corrosion conditions 3: temperature of 150°C, 60vol% of a liquid phase, 40vol% of a gas phase, the liquid phase containing 50vol% of mineralized water and 50vol% of crude oil, total pressure of 30MPa, including H₂S partial pressure of 0.9MPa, CO₂ partial pressure of 1.0MPa and the rest being N₂, and experimental time of 7 days. | | | | | | | | | | |

As seen from the test results of the properties, the modification of the inorganic particles enables the inorganic particles to be dispersed more uniformly in the polymer matrix; and after the compound modification, the lining material of a nonmetal flexible composite pipe is remarkably improved in terms of corrosion resistance, barrier properties, mechanical properties and temperature resistance.

Further, it should be noted that only several specific examples of the present invention are listed above. Apparently, the present invention is not limited to the above-mentioned examples, and many variations are possible. All variations that can be directly derived or envisioned by those of ordinary skill in the art from the disclosure of the present invention should be considered to be within the scope of the present invention.

## Claims

1. A lining material of a nonmetal flexible composite pipe, which is a modified thermoplastic polymer composite material, consisting of the following components in the following proportions:
89.5-99.4wt% of a polymer matrix;
0.5-10wt% of inorganic particles; and
0.1-0.5wt% of an antioxidantwherein the polymer matrix is one of, polyamide (PA), , polyketone (POK), , polyether ether ketone (PEEK), polyvinylidene fluoride (PVDF), fusible polytetrafluoroethylene (PFA), or a mixture thereof.

2. The lining material of a nonmetal flexible composite pipe according to claim 1, wherein the inorganic particles refer to one of nano silicon dioxide, carbon nano tube, carbon nanofiber aggregate, graphene oxide, nano montmorillonite, graphite and molybdenum disulfide, or a mixture thereof.

3. The lining material of a nonmetal flexible composite pipe according to claim 2, wherein the inorganic particles are subjected to surface modification using a surface modifier, wherein the surface modifier is one of a silane coupling agent, a quaternary ammonium salt surfactant, ethylenediamine, polyethyleneimine and a polyurethane prepolymer; and the mass ratio of the surface modifier to the inorganic particles is 1:100 to 1:10.

4. A method of preparing the lining material of a nonmetal flexible composite pipe according to any one of claims 1-3, comprising the following specific steps:
(1) preparation of raw materials: raw materials are weighted in a mass ratio for later use, the raw materials comprising 89.5-99.4wt% of a polymer matrix, 0.5-10wt% of inorganic particles and 0.1-0.5wt% of an antioxidant;
(2) compounding and plasticizing: the inorganic particles and the polymer matrix as well as the antioxidant are added into a twin-screw extruder or a mixer at an extruding or mixing temperature of 190-360°C, and extruded and cooled for later use; and
(3) pelleting: the materials after the compounding and plasticizing obtained in the step (2) are pelleted in a pelletizer to obtain the lining material of a nonmetal flexible composite pipe.

5. Use of the lining material of a nonmetal flexible composite pipe according to any one of claims 1-4 in a marine riser and/or a submarine pipeline.

## Patentansprüche

1. Auskleidungsmaterial für nichtmetallische flexible Verbundrohre, das ein modifiziertes thermoplastisches Polymerverbundmaterial ist, und die folgenden Komponenten umfasst:
89,5 - 99,4 Gew. % einer Polymermatrix;
0,5 - 10 Gew. % anorganische Partikel; und
0,1 - 0,5 Gew. % Antioxidans,
wobei die Polymermatrix eine Verbindung aus Polyamide (PA), Polyketon (POK), Polyetheretherketon (PEEK), Polyvinylidenfluorid (PVDF), schmelzbarem Polytetrafluoroethylen (PFA), oder eine Mischung davon ist.

2. Auskleidungsmaterial für nichtmetallische flexible Verbundrohre nach Anspruch 1, wobei die anorganische Partikel auf ein Material aus Nanosiliziumdioxid, Kohlenstoff-Nanoröhrchen, einem Kohlenstoff-Nanofaseraggregat, Grafenoxid, Nanomontmorillonit, Grafit und Molybdändisulfid, oder auf eine Mischung davon hinweisen.

3. Auskleidungsmaterial für nichtmetallische flexible Verbundrohre nach Anspruch 2, wobei die anorganischen Partikel einer Oberflächemodifikation ausgesetzt sind, wobei das Oberflächemodifiziermittel eine Verbindung aus einem Silan-Kupplungsmittel, einem Tensid aus quaternärem Ammoniumsalz, Ethylendiamin, Polyethylenimin, und einem Polyurethan-Prepolymer ist; und das Massenverhältnis des Oberflächemodifiziermittels zu den anorganischen Partikeln 1 : 100 bis 1 : 10 ist.

4. Verfahren zur Herstellung des Auskleidungsmaterial für nichtmetallische flexible Verbundrohre nach einem der Ansprüche 1 - 3, umfassend die folgenden Schritte:
(1) Herstellung der Rohstoffe: Rohstoffe werden in einem Massenverhältnis für einen späteren Nutzen gewogen, wobei die Rohstoffe 89,5 - 99,4 Gew. % einer Polymermatrix, 0,5 - 10 Gew. % anorganische Partikel und 0,1 - 0,5 Gew. % Antioxidans enthalten.
(2) Mischungsherstellung und Plastifizierung: die anorganische Partikel und die Polymermatrix sowie das Antioxidans werden einem Doppelschneckenextruder oder einem Mischer bei einer Extrudier- oder Mischtemperatur von 190 - 360 °C hinzugefügt, und extrudiert und für einen späteren Nutzen gekühlt; und
(3) Pelletierung: die nach Mischungsherstellung und Plastifizierung im Schritt 2 erhaltenen Stoffe werden in eine Pelletiermaschine zum Erhalten des Auskleidungsmaterials für nichtmetallische flexible Verbundrohre pelletiert.

5. Gebrauch des Auskleidungsmaterials für nichtmetallische flexible Verbundrohre nach einem der Ansprüche 1 - 4, in einer Meeressteigleitung und/oder einer Unterseefernleitung.

## Revendications

1. Matériau de revêtement pour tuyau composite souple non métallique, qui est un matériau composite en polymère thermoplastique modifié, comprenant les composants suivants dans les proportions suivantes :
89,5 - 99,4 % en poids d'une matrice polymère ;
0,5 -10 % en poids de particules anorganiques ; et
0,1 - 0,5 % en poids d'un antioxydant,
dans lequel la matrice polymère est l'un composé parmi un polyamide (PA), une polycétone (POK), une polyétheréthercétone (PEEK), un poly(fluorure de vinylidène) (PVDF), un polytétrafluoroéthylène (PFA) fusible, ou un mélange de ceux-ci.

2. Matériau de revêtement pour tuyau composite souple non métallique selon la revendication 1, dans lequel les particules anorganiques se réfèrent à un matériau parmi le dioxyde de silicium nanométrique, un nanotube de carbone, un ensemble de nanofibres de carbone, le dioxyde de graphène, la montmorillonite nanométrique, le graphite et le disulfure de molybdène, ou à un mélange de ceux-ci.

3. Matériau de revêtement pour tuyau composite souple non métallique selon la revendication 2, dans lequel les particules anorganiques sont soumises à une modification de surface en utilisant un modificateur de surface, où le modificateur de surface est l'un parmi un agent de couplage au silane, un tensioactif à un sel d'ammonium quaternaire, l'éthylènediamine, une polyéthylèneimine et un prépolymère de polyuréthane, et où le rapport massique du modificateur de surface aux particules anorganiques est de 1 :100 à 1:10.

4. Procédé de préparation du matériau de revêtement pour tuyau composite souple non métallique selon l'une quelconque des revendications 1 à 3, comprenant les étapes spécifiques suivantes :
(1) préparation de matières premières : des matières premières sont pesées dans un rapport massique pour une utilisation ultérieure, les matières premières comprenant 89,5 - 99,4 % en poids d'une matrice polymère, 0,5 -10 % en poids de particules anorganiques et 0,1 - 0,5 % en poids d'un antioxydant ;
(2) mélangeage et plastification : les particules anorganiques et la matrice polymère ainsi que l'antioxydant sont ajoutés dans une extrudeuse à deux vis ou dans un mélangeur à une température d'extrusion ou de mélange de 190 - 360 °C, et extrudés et refroidis pour un usage ultérieur ; et
(3) pelletisation : les matériaux après le mélangeage et la plastification obtenus à l'étape (2) sont pelletisés dans un pelletiseur afin d'obtenir un matériau de revêtement pour tuyau composite flexible non métallique.

5. Utilisation du matériau de revêtement pour tuyau composite souple non métallique selon l'une quelconque des revendications 1 - 4, dans une colonne montante marine et/ou dans un pipeline sous-marin.
